# EUROPEAN PATENT SPECIFICATION

(11) **EP 2 489 580 B1**
(45) Date of publication and mention of the grant of the patent: **23.10.2013**
(21) Application number: 12154635.2
(22) Date of filing: 09.02.2012
(51) Int. Cl.: B62H 1/04

(54) **Bicycle kickstand with two supporting bars**
Fahrradständer mit zwei Stützstangen
Béquille de bicyclette disposant de deux barres support

(30) Priority: 15.02.2011 IT PD20110009 U
(43) Date of publication of application: 22.08.2012
(73) Proprietor: Ursus S.P.A., 36027 Rosa' VI (IT)
(72) Inventor: Ferronato, Sergio, 36027 ROSA' VI (IT)
(74) Representative: Modiano, Micaela Nadia

(56) References cited:
- EP-A1- 2 236 396
- WO-A1-2009/093741
- US-A- 658 023
- US-A- 669 538
- US-A- 2 929 264

## Description

The present invention relates to a bicycle kickstand with two supporting bars.

Nowadays bicycle kickstands are increasingly common with two supporting bars, one for each side, the use of which is increasing in line with the growing demand for electric bicycles, specially-equipped citybikes for transporting loads, and bicycles that are relatively heavy generally or which can be loaded with masses that considerably increase their original weight.

Such bicycles need to be supported when not in use by bicycle kickstands with two supporting bars, which offer a double simultaneous support plus the maintenance of the center of gravity of the bicycle on a vertical plane that is also in substantial symmetry with the bicycle itself, with consequent stability of the bicycle that is much greater than the adoption of a lateral stand, which determines the shifting of the center of gravity of the bicycle from one side to the other with consequent creation of a torque owing to the weight force which would tip the bicycle over in the absence of the lateral stand.

A bicycle stand with two supporting bars is currently known and widespread, the peculiarity of which is that it comprises two supporting bars each one of which is rotatably coupled to a central block to be fixed to a frame of a velocipede, wherein each bar is provided, at its pivot of rotatable coupling with the block, with kinematic means adapted to transmit the rotation of one bar to the other bar, and in particular, such kinematic means are constituted by a conical pair of gearwheels.

Such bicycle stand is the subject matter of EP 2236396 A1 in the name of this same Applicant. This document discloses the preamble of claim 1.

Such bicycle stand, although widely appreciated and common, exhibits room for improvement.

In fact the conical pair that defines the kinematic means of the bicycle stand comprises a first conical gearwheel arc made in a single body on the pivoting head of a first bar, and a second corresponding conical gearwheel arc defined on the pivoting head of the second bar, which is made in the same way.

Such bars with integrated conical gearing and the block are obtained by way of casting aluminum or an alloy thereof.

Such aluminum bars are very expensive both in terms of raw materials, and in terms of mold parts.

The aim of the present invention is to provide a bicycle kickstand with two supporting bars that is capable of overcoming the above mentioned drawbacks of the conventional bicycle stand with two bars mentioned above.

Within this aim, an object of the invention is to provide a bicycle kickstand with two bars that is more economic both in terms of raw materials and in terms of processing in order to make its components, and which is also easy and quick to assemble.

Another object of the invention is to provide a bicycle kickstand with two bars that is capable of ensuring excellent stability of the velocipede in the lowered configuration for use and minimal space occupation in the lifted and inactive configuration.

A further object of the invention is to provide a bicycle kickstand with two bars that can be installed on conventional velocipedes already in use.

A still further object of the invention is to provide a bicycle stand with two bars that can be intuitively maneuvered with the same ease as conventional bicycle stands with two bars.

Another object of the invention is to provide a bicycle kickstand with two bars that can be produced using known systems and technologies, and at low cost.

This aim and these and other objects which will become better apparent hereinafter are achieved by a bicycle kickstand with two supporting bars, wherein each one of the two supporting bars is rotatably coupled to a central block to be fixed to a frame of a velocipede and each bar being provided, at its pivot of rotatable coupling with said block, with kinematic means adapted to transmit the rotation of one bar to the other bar, characterized in that
- each one of said bars is defined by a metallic profile,
- said kinematic means are constituted by two flat gearwheel arcs, made by pressing sheet metal, and fixed to one end of its corresponding bar, said gearwheel arcs being adapted to mutually mesh in order to transmit rotation between two non-parallel axes,
- said central block being constituted by a box-like body made of sheet metal.

Further characteristics and advantages of the invention will become better apparent from the description of a preferred, but not exclusive, embodiment of the bicycle kickstand with two bars according to the invention, which is illustrated by way of non-limiting example in the accompanying drawings wherein:

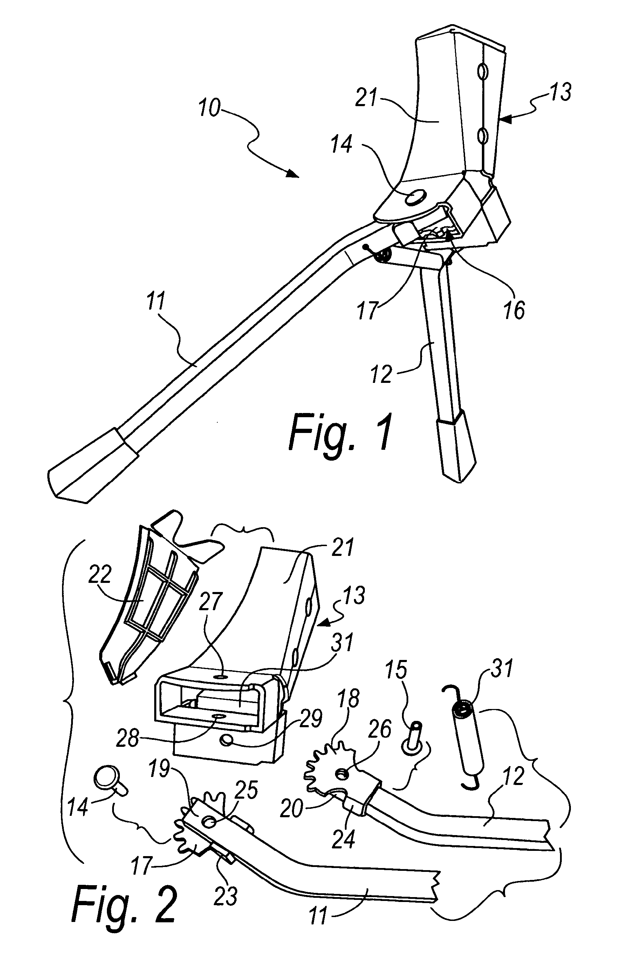

Figure 1 is a perspective view of the bicycle kickstand according to the invention;
Figure 2 is an exploded view of the bicycle kickstand according to the invention;

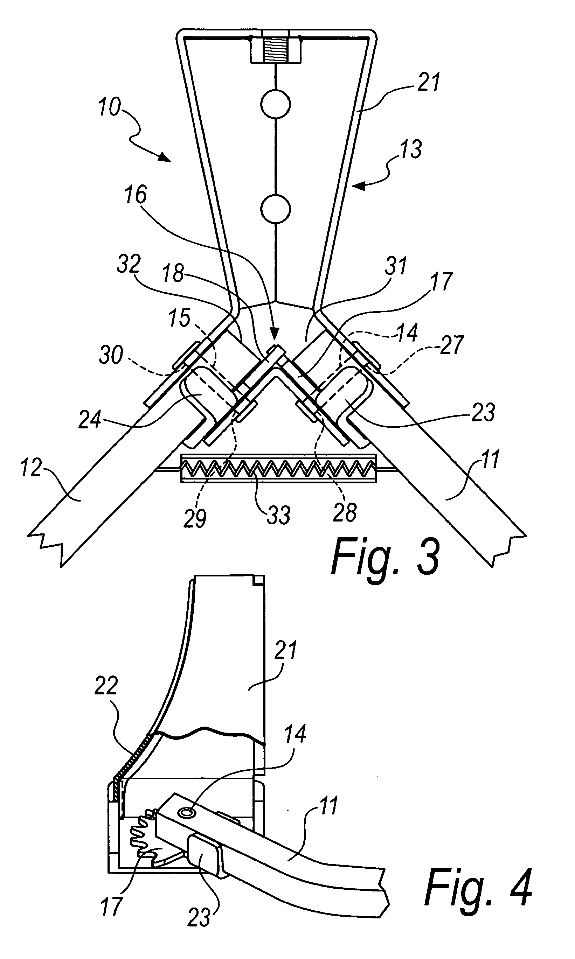

Figure 3 is a front sectional view of the bicycle kickstand according to the invention;
Figure 4 is a sectional side view of the bicycle kickstand according to the invention;
Figure 5 is a side view of a bicycle kickstand according to the invention applied to a bicycle.

With reference to the figures, a bicycle kickstand with two supporting bars according to the invention is generally designated in the figures with the reference numeral 10.

The bicycle kickstand 10 is of the type wherein each one of the two supporting bars 11 and 12 is rotatably coupled to a central block 13 to be fixed to to a frame of a velocipede.

Each bar 11, 12 is rotatably coupled with its own pivot, 14 and 15 respectively, to the block 13.

At the pivots 14 and 15 kinematic means 16 are provided, comprised of a pair of gearwheels, adapted to transmit the rotation of one bar to the other bar.

The peculiarity of the invention lies in the fact that:
- each one of the bars 11 and 12 is defined by a metallic profile, here shown by way of example as a tubular element that is quadrangular in section,
- the kinematic means 16 are constituted by two flat gearwheel arcs 17 and 18, made by pressing sheet metal, and fixed to one end 19 and 20 of a corresponding bar 11, 12; the gearwheel arcs 17 and 18 are adapted to mutually mesh in order to transmit rotation between two non-parallel axes.

Moreover, the central block 13 is constituted by a box-like body 21 made of sheet metal.

The bicycle kickstand 10 is completed by a front cover 22, adapted to protect the kinematic means 16 inside the box-like body 21 of the central block 13.

The gearwheel arcs 17 and 18 are made in a single piece with a corresponding centering U-section 23 and 24 respectively, which is contoured in order to be placed straddling the corresponding bar 11 and 12, for the correct positioning of the gearwheel arc 17 and 18 with respect to the holes 25 and 26 in the bars.

The U-sections 23 and 24 are made in a single piece with the corresponding gearwheel arcs 17 and 18, by blanking, or cutting, and press-forming of sheet metal.

Similarly, the box-like body 21 that defines the block 13 is also made in a single piece by blanking, or cutting, and press-forming of a sheet of sheet metal.

The pivots 14 and 15 are constituted by two rivets adapted to be upset once inserted through both the holes 27, 28, 29 and 30 defined on the box-like body 21 at the seats 31 and 32 for inserting the gearwheel arcs 17 and 18, and obviously through the holes 25 and 26 in the bars and gearwheel arcs.

The bicycle kickstand 10 according to the invention is much simpler and cheaper both to produce and to assemble, with respect to the above mentioned conventional bicycle stand with two bars, comprising conical gearwheel arcs in a single piece with the corresponding bars, made by casting aluminum.

The two flat gearwheel arcs 17 and 18 enable a rotary movement of the two bars 11 and 12 that is in line with what is performed by the conventional bicycle stand, a movement that therefore occurs between a first, lowered configuration of supporting on the ground, and a second, lifted, inactive configuration.

The bicycle kickstand 10 according to the invention comprises means for the reversible locking of the two bars in the two configurations, with bars lowered and with bars raised.

In the embodiment described herein of the bicycle kickstand 10 according to the invention, the reversible locking means are constituted by a helical traction spring 33 hooked with its ends between the two bars 11 and 12.

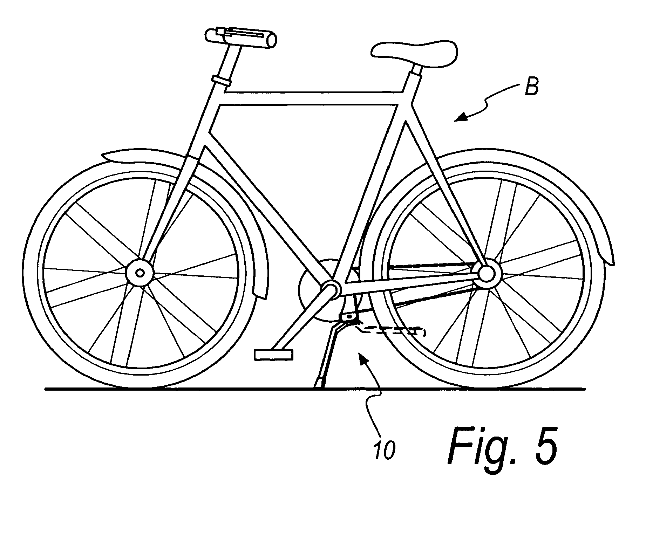

By way of non-limiting example, Figure 5 is a side view of a bicycle kickstand 10 according to the invention applied to a bicycle B.

In practice it has been found that the invention fully achieves the intended aim and objects.

In particular with the invention a bicycle kickstand with two bars is provided that is capable of ensuring excellent stability of the velocipede in the lowered configuration for use and minimal space occupation in the lifted and inactive configuration, thanks to the peculiar inclination of the rotation axes of the two bars, and thanks to the kinematic means that make possible the symmetric and simultaneous rotary movement of the two bars.

What is more, with the invention a bicycle kickstand with two bars is provided that can be produced and assembled much more simply and cheaply with respect to the known art.

Naturally the bicycle kickstand according to the invention can be installed on conventional velocipedes already in use.

Moreover, with the invention a bicycle kickstand with two bars is provided that can be intuitively maneuvered with the same ease as conventional bicycle stands with two bars.

Last but not least, with the present invention a bicycle kickstand with two bars is provided that is structurally simple and easy to use, and which can be produced using known systems and technologies, and at low cost.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A bicycle kickstand (10) with two supporting bars, wherein each one of the two supporting bars (11, 12) is rotatably coupled to a central block (13) to be fixed to a frame of a velocipede and each bar (11, 12) being provided, at its pivot (14, 15) of rotatable coupling with said block (13), with kinematic means (16) adapted to transmit the rotation of one bar to the other bar, **characterized in that**
- each one of said bars (11, 12) is defined by a metallic profile,
- said kinematic means (16) are constituted by two flat gearwheel arcs (17, 18), made by pressing sheet metal, and fixed to one end (19, 20) of its corresponding bar (11, 12), said gearwheel arcs (17, 18) being adapted to mutually mesh in order to transmit rotation between two non-parallel axes,
- said central block (13) being constituted by a box-like body (21) made of sheet metal.

2. The bicycle kickstand according to claim 1, **characterized in that** it comprises a front cover (22), adapted to protect the kinematic means (16) inside the box-like body (21) of the central block (13).

3. The bicycle kickstand according to one or more of the preceding claims, **characterized in that** said gearwheel arcs (17, 18) are each in a single piece with a corresponding centering U-section (23, 24), contoured in order to be placed straddling its corresponding bar (11, 12).

4. The bicycle kickstand according to claim 3, **characterized in that** said U-sections (23, 24) are made in a single piece with the corresponding gearwheel arcs (17, 18) by blanking, or cutting, and press-forming of sheet metal.

5. The bicycle kickstand according to one or more of the preceding claims, **characterized in that** said box-like body (21) is made in a single piece by blanking, or cutting, and press-forming of a sheet of sheet metal.

6. The bicycle kickstand according to one or more of the preceding claims, **characterized in that** said pivots (14, 15) are constituted by two rivets, each adapted to be upset once inserted through a pair of holes (27, 28, 29, 30) defined on the box-like body (21) at the seats (31, 32) for inserting the gearwheel arcs (17, 18), and through holes (25, 26) provided in said bars and gearwheel arcs.

7. The bicycle kickstand according to one or more of the preceding claims, **characterized in that** it is provided with means for the reversible locking of the two bars (11, 12) in the two configurations with the bars lowered and with the bars raised.

8. The bicycle kickstand according to claim 7, **characterized in that** said reversible locking means are constituted by a helical traction spring (33) hooked with its ends between the two bars (11, 12).

## Patentansprüche

1. Ein Fahrradständer (10) mit zwei Stützstangen, wobei jede der zwei Stützstangen (11, 12) drehbar mit einem zentralen Block (13) gekoppelt ist, zu befestigen an einem Rahmen eines Velozipeds, wobei jede Stange (11, 12) an ihrem Drehpunkt (14, 15) drehbarer Kopplung mit dem Block (13) mit kinematischen Mitteln (16) versehen ist, die ausgebildet sind, um die Drehung einer Stange auf die andere Stange zu übertragen, **dadurch gekennzeichnet, dass**
- jede der Stangen (11, 12) von einem Metallprofil bestimmt wird,
- die kinematischen Mittel (16) aus zwei flachen Zahnradbögen (17, 18) bestehen, hergestellt durch das Pressen von Metallblech und an einem Ende (19, 20) ihrer entsprechenden Stange (11, 12) befestigt, wobei die Zahnradbögen (17, 18) ausgebildet sind, um ineinander einzugreifen, um Drehung zwischen zwei nicht parallelen Achsen zu übertragen,
- wobei der zentrale Block (13) aus einem kastenartigen Körper (21) aus Metallblech besteht.

2. Der Fahrradständer gemäß Anspruch 1, **dadurch gekennzeichnet, dass** er eine vordere Abdeckung (22) umfasst, ausgebildet, um die kinematischen Mittel (16) innerhalb des kastenartigen Körpers (21) des zentralen Blocks (13) zu schützen.

3. Der Fahrradständer gemäß einem oder mehreren der obigen Ansprüche, **dadurch gekennzeichnet, dass** die Zahnradbögen (17, 18) jeweils einteilig mit einem entsprechenden zentrierenden U-Abschnitt (23, 24) sind, geformt, um an ihre seine jeweilige Stange (11, 12) spreizend platziert zu werden.

4. Der Fahrradständer gemäß Anspruch 3, **dadurch gekennzeichnet, dass** die U-Abschnitte (23, 24) einteilig mit den entsprechenden Zahnradbögen (17, 18) geformt werden durch Stanzen, oder Schneiden, und Pressformen von Metallblech.

5. Der Fahrradständer gemäß einem oder mehreren der obigen Ansprüche, **dadurch gekennzeichnet, dass** der kastenartige Körper (21) einteilig hergestellt wird durch Stanzen, oder Schneiden, und Pressformen eines Blechs von Metallblech.

6. Der Fahrradständer gemäß einem oder mehreren der obigen Ansprüche, **dadurch gekennzeichnet, dass** die Drehzapfen (14, 15) aus zwei Nieten bestehen, von denen jede ausgebildet ist, um gestaucht zu werden, sobald sie durch ein Paar von Löchern (27, 28, 29, 30) eingeführt wurde, die im kastenartigen Körper (21) an den Sitzen (31, 32) zum Einführen der Zahnradbögen (17, 18) geformt sind, und durch Löcher (25, 26), die in den Stangen und Zahnradbögen angebracht sind.

7. Der Fahrradständer gemäß einem oder mehreren der obigen Ansprüche, **dadurch gekennzeichnet, dass** er mit Mitteln zur reversiblen Verriegelung der zwei Stangen (11, 12) in den zwei Anordnungen mit gesenkten Stangen und mit angehobenen Stangen ausgestattet ist.

8. Der Fahrradständer gemäß Anspruch 7, **dadurch gekennzeichnet, dass** die Mittel zur reversiblen Verriegelung in einer Schrauben-Zugfeder (33) bestehen, die mit ihren Enden zwischen den zwei Stangen (11, 12) eingehakt ist.

## Revendications

1. Béquille de bicyclette (10) avec deux barres de support, dans laquelle chacune des deux barres de support (11, 12) est couplée, de manière à permettre la rotation, à un bloc central (13) destiné à être fixé sur un cadre de vélocipède, et chaque barre (11, 12) étant prévue, au niveau de son pivot (14, 15) de couplage rotatif avec ledit bloc (13), avec des moyens cinématiques (16) adaptés pour transmettre la rotation d'une barre à l'autre, **caractérisée en ce que** :
- chacune desdites barres (11, 12) est définie par un profil métallique,
- lesdits moyens cinématiques (16) sont constitués de deux arcs de roue dentée plats (17, 18) réalisés par formage à la presse d'une tôle métallique, et fixés à une extrémité (19, 20) de leur barre (11, 12) correspondante, lesdits arcs de roue dentée (17, 18) étant adaptés pour s'engrener mutuellement afin de transmettre la rotation entre deux axes non parallèles,
- ledit bloc central (13) étant constitué d'un corps en forme de boîte (21) fabriqué à partir d'une tôle métallique.

2. Béquille de bicyclette selon la revendication 1, **caractérisée en ce qu'**elle comprend un couvercle avant (22) adapté pour protéger les moyens cinématiques (16) qui se trouvent à l'intérieur du corps en forme de boîte (21) du bloc central (13).

3. Béquille de bicyclette selon une ou plusieurs des revendications précédentes, **caractérisée en ce que** lesdits arcs de roue dentée (17, 18) sont chacun réalisés d'un seul tenant avec une section en U de centrage (23, 24) correspondante, profilée de manière à être placée à cheval sur sa barre (11, 12) correspondante.

4. Béquille de bicyclette selon la revendication 3, **caractérisée en ce que** lesdites sections en U (23, 24) sont réalisées d'un seul tenant avec les arcs de roue dentée (17, 18) correspondants par découpage à la presse ou découpage, et par formage à la presse d'une tôle métallique.

5. Béquille de bicyclette selon une ou plusieurs des revendications précédentes, **caractérisée en ce que** ledit corps en forme de boîte (21) est réalisé d'un seul tenant par découpage à la presse ou découpage, et par formage à la presse d'une feuille de tôle métallique.

6. Béquille de bicyclette selon une ou plusieurs des revendications précédentes, **caractérisée en ce que** lesdits pivots (14, 15) sont constitués de deux rivets, chacun adapté pour être renversé, une fois inséré à travers une paire de trous (27, 28, 29, 30) définis sur le corps en forme de boîte (21) au niveau des sièges (31, 32) pour insérer les arcs de roue dentée (17, 18) et à travers les trous (25, 26) prévus dans lesdites barres et lesdits arcs de roue dentée.

7. Béquille de bicyclette selon une ou plusieurs des revendications précédentes, **caractérisée en ce qu'**elle est prévue avec des moyens permettant le verrouillage réversible des deux barres (11, 12) dans les deux configurations, avec les barres abaissées et avec les barres relevées.

8. Béquille de bicyclette selon la revendication 7, **caractérisée en ce que** lesdits moyens de verrouillage réversible sont constitués d'un ressort de traction hélicoïdal (33) accroché par ses extrémités entre les deux barres (11, 12).
